# EUROPÄISCHE PATENTSCHRIFT

(11) **EP 0 525 454 B1**
(45) Veröffentlichungstag und Bekanntmachung des Hinweises auf die Patenterteilung: **24.08.1994**
(21) Anmeldenummer: 92111564.8
(22) Anmeldetag: 08.07.1992
(51) Int. Cl.: A47J 36/02

(54) **Arbeitsverfahren zur Herstellung eines Gar- oder Kochgerätes**
Method of manufacturing a cooking vessel
Procédé de fabrication d'un récipient de cuisson

(30) Priorität: 30.07.1991 DE 4125114
(43) Veröffentlichungstag der Anmeldung: 03.02.1993
(73) Patentinhaber: AMC International Alfa Metalcraft Corporation AG, 6343 Rotkreuz (CH)
(72) Erfinder: Figueras, Jaime Mas, Barcelona 21 (ES)
(74) Vertreter: Andrejewski, Walter

(56) Entgegenhaltungen:
- EP-A- 0 209 745
- WO-A-87/04911
- DE-B- 2 258 795
- US-A- 2 786 266

## Beschreibung

Die Erfindung betrifft ein Arbeitsverfahren zur Herstellung eines Gar- oder Kochgerätes mit rundem Aufnahmebehälter für das Gar- oder Kochgut, der einen Aufnahmebehälterboden, eine Platine aus wärmeleitenden Platinenwerkstoff und eine Kapselabdeckung der Platine aufweist, welche Kapselabdeckung mit ihrem Kapselabdeckungsboden zum Aufnahmebehälter hin mit konvexer Krümmung geformt ist sowie mit einem Kapselabdeckungskragen an dem runden Aufnahmebehälter in einem gekrümmten Übergangsbereich zwischen Aufnahmebehälterboden und Aufnahmebehältermantel anliegt, wobei der Aufnahmebehälter sowie die Kapselabdeckung aus nichtrostendem Stahl bestehen und die Platine mit dem Aufnahmebehälterboden und der Kapselabdeckung intermetallisch verbunden ist, wobei zum Zwecke der Herstellung der intermetallischen Verbindung in die Kapselabdeckung eine Platine eingeführt wird, die zum vorgeformten Kapselabdeckungskragen hin einen ringförmigen Fließraum freiläßt, und das Aggregat aus Aufnahmebehälterboden, Platine und Kapselabdeckung im zentrierten Zustand zwischen dem Stempel und der Matrize einer Presse durch einfache oder mehrfache Impulspressung unter Ausformung der konvexen Krümmung des Kapselabdeckungsbodens sowie Anformung des Randes des Kapselabdeckungskragens an den Aufnahmebehälter intermetallisch verbunden wird und wobei bei der Impulspressung die Platine durch Fließverformung in den Fließraum hineingedrückt sowie dabei auch in diesem Bereich mit dem Kapselabdeckungsboden, dem Kapselabdeckungskragen sowie dem entsprechenden Bereich des Aufnahmebehälters intermetallisch verbunden wird. - Es versteht sich, daß das Verfahren bei Umgebungstemperatur oder als Warmverformungsverfahren durchgeführt werden kann. Die Impulsenergie ist nach Maßgabe der Temperatur einzurichten, die der Aufnahmebehälter, zumindest im Bereich des Aufnahmebehälterbodens, die Kapselabdeckung sowie die Platine aufweisen. Zumeist werden diese Temperaturen so gewählt, daß sie im Bereich, aber ausreichend unterhalb der Schmelztemperatur des Platinenwerkstoffes liegen. Ein sehr gebräuchlicher Platinenwerkstoff ist Aluminium in Form von technisch reinem Aluminium. Gebräuchlich als Platinenwerkstoff ist auch Kupfer. Bei den Gar- oder Kochgeräten kann es sich um Töpfe, Pfannen oder dergleichen Geräte handeln, insbesondere um Kochtöpfe und Dampfkochtöpfe. Die Platine dient der Verbesserung des Wärmeüberganges von einem Kochfeld oder einer Herdplatte auf das Gar- oder Kochgut. Dieser Wärmeübergang ist beeinträchtigt, wenn die intermetallische Verbindung gestört ist. Das gilt auch dann, wenn die Störung im Bereich des Kapselabdeckungskragens auftritt. Es versteht sich, daß die Werkzeuge, d. h. die Matrize und der Stempel, mit denen in einer Presse die Impulspressung durchgeführt wird, so eingerichtet sind, daß auch die schon angegebene leicht konvexe Ausformung des Kapselabdeckungsbodens sich einstellt. Zumeist ist der Aufnahmebehälterboden nach außen leicht konvex gekrümmt. Es versteht sich fernerhin, daß die geometrischen Verhältnisse in bezug auf den Aufnahmebehälterboden, die Kapselabdeckung und die Platine so einzurichten sind, daß bei dem fertigen Gar- oder Kochgerät die Platine den Zwischenraum zwischen Aufnahmebehälterboden und Kapselabdeckung vollständig ausfüllt, d. h. bei der Herstellung der intermetallischen Verbindung in den Fließraum ausfüllend eintritt. Ein definierter ungestörter Fließvorgang des Werkstoffes der Platine ist für die intermetallische Verbindung wichtig. Die Platine kann als ebene Platte, aber auch mit gleichsam linsenförmigem Querschnitt oder gestuftern Querschnitt ausgeführt sein. Im Rahmen der Erfindung liegt es, die der Platine zugewandte Oberfläche der Kapselabdeckung und des Aufnahmebehälterbodens so einzurichten, daß die intermetallische Verbindung gefördert wird. Dazu kann mit einer Anätzung, einer Aufrauhung oder dergleichen gearbeitet werden. Von besonderer Bedeutung ist es fernerhin, daß der Kapselabdeckungskragen mit seinem Rand an den Aufnahmebehälter störungsfrei anschließt. Tritt hier Platinenwerkstoff aus, so muß der Aufnahmebehälter aus ästhetischen Gründen und aus korrosionstechnischen Gründen verworfen werden. Klafft ein Spalt, so kann bei Gebrauch oder Spülung Wasser eintreten und störende Korrosionen auslösen.

Bei dem bekannten Verfahren, von dem die Erfindung ausgeht (EP 0 209 745), wird wie folgt gearbeitet: Die Platine wird im Zentrum des Kapselabdeckungsbodens mittels Punktschweißung befestigt. Das Aggregat aus Kapselabdeckung, Platine und Aufnahmebehälterboden bzw. Aufnahmebehälter wird auf eine Temperatur erwärmt, die nahe dem Schmelzpunkt des Platinenwerkstoffes liegt, jedoch unterhalb dieses Schmelzpunktes verbleibt. Die Anfangsdicke der Platine ist mindestens 20 % größer als die Enddicke der Platine nach Herstellung der intermetallischen Verbindung. In einer ersten Phase der Impulspressung wird der Druck fortschreitend, vom Zentrum des Aggregates ausgehend zum Rand des Aggregates hin, aufgebracht, wobei eine besondere Konvexität eingerichtet wird, und zwar derart, daß die gesamte Krümmung der Konvexität der verformten Platine und des Aufnahmebehälters gleich oder größer als 0,25 % des mittleren Durchmessers dieses Aufnahmebehälterbodens in seiner endgültigen Form beträgt. Auf diese Weise soll die Luft vom Zentrum nach außen aus dem Aggregat aus Aufnahmebehälterboden, Platine und Kapselabdeckung herausgedrückt werden. Die bekannte Verfahrensweise führt jedoch wegen der Bedingungen, daß einerseits die Anfangsdicke der Platine mindestens 20 % größer sein muß als die Enddicke dieser Platine nach Herstellung der intermetallischen Verbindung, daß andererseits die Konvexität wie vorstehend beschrieben einzurichten ist, zu Zwängen, die die Anwendbarkeit der beschriebenen Verfahrensmaßnahmen beschränken. Im übrigen kann nicht unter allen Betriebsbedingungen sichergestellt werden, daß die Punktschweißverbindung zwischen Platine und Kapselabdeckungsboden impulspressungsfest ist. Reißt sie bei der Impulspressung ab, so können Verschiebungen bei der Impulspressung nicht ausgeschlossen werden und danach ist nicht gewährleistet, daß die Platine auch in ihrem Randbereich und an dem Kapselabdeckungskragen eine allen Anforderungen genügende intermetallische Verbindung erfährt.

Der Erfindung liegt die Aufgabe zugrunde, ein Arbeitsverfahren zur Herstellung eines Gar- oder Kochgerätes des eingangs beschriebenen Aufbaus anzugeben, welches sicherstellt, daß die Platine auch in ihrem Randbereich und an dem Kapselabdeckungskragen eine allen Anforderungen genügende intermetallische Verbindung erfährt und Störungen am Rand des Kapselabdeckungskragens nicht auftreten.

Zur Lösung dieser Aufgabe lehrt die Erfindung, daß mit einer Platine mit im Grundriß kreisförmigen Platinengrundkörper gearbeitet wird, der zumindest drei über ihren kreisförmigen Umfang randseitige Zentriervorsprünge aufweist, daß die Platine in der Kapselabdeckung durch Anlage der Zentriervorsprünge an den Kapselabdeckungskragen und/oder an einen Übergangsbereich zwischen Kapselabdeckungsboden und Kapselabdeckungskragen impulspressungsfest zentriert wird und daß die Impulspressung so geführt wird, daß bei gleichzeitiger Ausbildung der intermetallischen Verbindung eine stoffschlüssige Fließverbindung des Platinenwerkstoffes des Platinengrundkörpers und der Zentriervorsprünge erreicht sowie bei der weiteren Fließverformung der Platinenwerkstoff als einheitlicher Kragen bis in den Randbereich des Kapselabdeckungskragens gepreßt wird. Zusätzlich kann eine zentrale Punktschweißung, die lediglich fixierenden Charakter zu haben braucht, aus handhabungstechnischen Gründen im Zusammenhang mit der Beschickung einer für die Durchführung des Verfahrens eingerichteten Presse durchgeführt sein. Nach bevorzugter Ausführungsform der Erfindung wird mit einer Platine gearbeitet, die über ihren Umfang gleichförmig verteilte Zentriervorsprünge aufweist.

Die Erfindung beruht auf der Erkenntnis, daß mit Hilfe einer Zentrierung der mit geringen Toleranzen vorgefertigten Platine über die beschriebenen Zentriervorsprünge an der Platine, an dem mit hoher Präzision vorgeformten Kapselabdeckungskragen beim Impulspressen den Wärmeübergang störende Fehler der intermetallischen Verbindung ebenso vermieden werden können wie klaffende Spalte zwischen dem Rand des Kapselabdeckungskragens und dem Aufnahmebehälter. An sich und für sich müßten Bedenken bestehen, in der beschriebenen Weise mit Zentriervorsprüngen zu arbeiten, weil im Bereich der Zentriervorsprünge die gleichmäßig vom Zentrum der Platine ausgehende Fließverformung beeinträchtigt werden könnte, die für eine ausreichend intermetallische Verbindung erforderlich ist. Das ist überraschenderweise nicht der Fall, weil die Impulspressung energiemäßig, d. h. schlagimpulsmäßig, so geführt werden kann, daß bei gleichzeitiger Ausbildung der intermetallischen Verbindung eine stoffschlüssige Fließvereinigung des Platinenwerkstoffes des Platinengrundkörpers und der Zentriervorsprünge erreicht wird und bei der weiteren Fließverformung der Platinenwerkstoff als einheitlicher Kranz, der über seinen Umfang praktisch keine Inhomogenitäten zeigt, bis in den Randbereich des Kapselabdeckungskragens gepreßt werden kann. Daß eine stoffschlüssige Fließvereinigung des Platinenwerkstoffes des Platinengrundkörpers und der Zentriervorsprünge hergestellt werden kann, war nicht zu erwarten. Sie ist aber erreichbar, wenn auch im Schliffbild die Zentriervorsprünge, verbreitert, gleichsam als Textur noch erkennbar sind, was die Ausbildung der intermetallischen Verbindung nicht stört. Die Zentrierung und die dadurch bewirkte Abstützung der Platine an dem Kapselabdeckungskragen beim Impulspressen mit Fließverformung sind so genau, daß sich am Rand des Kapselabdeckungskragens gegenüber dem Aufnahmebehälter weder ein störender Spalt bildet noch Platinenwerkstoff austritt. Es versteht sich, daß der Aufnahmetopf und die Kapselabdeckung mit der Platine in den Werkzeugen der Presse, in der die Impulspressung erfolgt, ausreichend genau positioniert und zentriert sind. Es versteht sich fernerhin, daß das Volumen der Platine und der Innenraum der Kapselabdeckung ausreichend genau aufeinander abgestimmt sind und daß der Fließraum so eingerichtet ist, daß eine ausreichende Fließverformung und über die Fließverformung eine allen Ansprüchen genügende intermetallische Verbindung gewährleistet sind.

Im einzelnen bestehen im Rahmen der Erfindung mehrere Möglichkeiten der weiteren Ausgestaltung des erfindungsgemäßen Verfahrens. Vorzugsweise wird mit einer Platine gearbeitet, die Zentriervorsprünge aufweist, die sich in radialer Richtung sowie in Umfangsrichtung über einige Millimeter erstrecken und zum Kapselabdeckungskragen bzw. zum Übergangsbereich zwischen Kapselabdeckungskragen und Kapselabdeckungsboden hin bogenförmig, vorzugsweise kreisbogenförmig gestaltet sind. - Einige Millimeter meint im Rahmen dieser Lehre der Erfindung Größenordnungen von 5 bis 10 Millimetern. Durch die bogenförmige Gestaltung der Zentriervorsprünge wird zu Beginn des Kontaktes zwischen der Platine und der Kapselabdeckung eine punkt- oder linienförmige Berührung bewirkt, was die Fließvereinigung des Platinenwerkstoffes des Platinengrundkörpers und der Zentriervorsprünge ebenso fördert wie die intermetallische Verbindung bis in den Bereich des Kapselabdeckungskragens hinein.

Überraschenderweise ist es nicht erforderlich, bei der Verwirklichung des erfindungsgemäßen Verfahrens die Zwänge in Kauf zu nehmen, die einleitend im Zusammenhang mit dem Verfahren, von dem die Erfindung ausgeht (EP 0 209 745), beschrieben worden sind. Es kann vielmehr mit einer Platine gearbeitet werden, deren Dicke vor der Fließverformung im kalten Zustand um max. 16 % dicker ist als nach der Fließverformung. Das reduziert bei der Herstellung der Gar- oder Kochgeräte den Materialaufwand und führt zugleich zu einem für die intermetallische Verbindung besonders günstigen Fließverhalten, wenn im übrigen erfindungsgemäß verfahren wird. Im Rahmen der Erfindung kann gleichsam durch eine Abdichtung sichergestellt werden, daß über den Rand des Kapselabdeckungskragens Platinenwerkstoff nicht austreten kann, und zwar dadurch, daß der Rand des Kapselabdeckungskragens oder eine Kante am Rand des Kapselabdeckungskragens bei der Impulspressung mit der sich ausbildenden Fließverformung dichtend gegen den Aufnahmebehälter angepreßt und dadurch an dem Aufnahmebehälter und/oder an dem Kapselabdeckungskragen eine bleibende Verformung ausgebildet wird. Gleichzeitig verbessert die zuletzt beschriebene Maßnahme im Bereich des Randes des Kapselabdeckungskragens die intermetallische Verbindung. Am fertigen Gar- oder Kochgerät ist der Spalt zwischen Kapselabdeckung und Aufnahmebehälter am Rand des Kapselabdeckungskragens so eng, daß selbst per Spülmittel entspanntes Wasser nicht eindringen kann. Störende Korrosionserscheinungen im gekapselten Bereich werden nicht beobachtet. Im Rahmen der Erfindung meint "dichtend angepreßt" dicht in bezug auf das fließverformend "fließende" Metall, aber ausreichend luftdurchlässig. Ohne weiteres ist sicherzustellen, daß auch Lufteinschlüsse, die die intermetallische Verbindung unterbrechen und die Wärmeübertragung beeinträchtigen, nicht auftreten, und zwar dadurch, daß bei der Impulspressung erst die Luft aus dem Bereich zwischen Aufnahmebehälterboden und Kapselabdeckung herausgepreßt und danach der Rand des Kapselabdeckungskragens oder eine Kante am Rand des Kapselabdeckungskragens bei der Impulspressung an den Aufnahmebehälter angepreßt werden.

In bezug auf die Werkstoffauswahl und Bemessung bestehen im Rahmen der Erfindung mehrere Möglichkeiten. So kann mit den verschiedensten nichtrostenden Stählen in bezug auf den Aufnahmebehälter und in bezug auf die Kapselabdeckung gearbeitet werden. Bemessungsmäßig ist eine bevorzugte Ausführungsform der Erfindung dadurch gekennzeichnet, daß mit einer Kapselabdeckung gearbeitet wird, deren Blechdicke etwa der Blechdicke des Aufnahmebehälters entspricht. Die Blechdicke der Kapselabdeckung soll max. um 20 % kleiner sein als die Blechdicke des Aufnahmebehälters. Das vermeidet bimetallähnliche Verformungen und/oder Spannungen zwischen diesen Bauteilen und der Platine im Gebrauch. Wie bereits erwähnt, kann mit Platinen aus technisch reinem Aluminium gearbeitet werden.

Obgleich das erfindungsgemäße Verfahren kalt, d. h. bei Umgebungstemperatur, durchgeführt werden kann, ist eine bevorzugte Ausführungstorm der Erfindung dadurch gekennzeichnet daß die Impulspressung in bezug auf den Aufnahmebehälter, die Kapselabdeckung und die Platine bei einer Temperatur durchgeführt wird, die in dem Bereich der Schmelztemperatur der Platine, jedoch ein wenig darunterliegt, und daß mit einer Temperatur der Verformungswerkzeuge gearbeitet wird, die im Bereich zwischen 100 bis 350° C liegt, z. B. Matrize im Bereich von 100 bis 150° C, Stempel im Bereich von 200 bis 350° C.

Gegenstand der Erfindung sind auch Gar- oder Kochgeräte des eingangs beschriebenen Aufbaus, die nach dem erfindungsgemäßen Verfahren hergestellt worden sind.

Im folgenden wird die Erfindung anhand einer lediglich ein Ausführungsbeispiel darstellenden Zeichnung ausführlicher erläutert. Es zeigen in schematischer Darstellung
- Fig. 1: einen Vertikalschnitt durch ein Werkzeug mit Matrize und Stempel mit Aufnahmebehälter des Gar- oder Kochgerätes, Kapselabdeckung und Platine bei einem erfindungsgemäßen Verfahrensschritt, ausschnittsweise
- Fig. 2: eine andere Ausführungsform des Gegenstandes der Fig. 1,
- Fig. 3: einen Schnitt in Richtung A-A durch den Gegenstand der Fig. 1,
- Fig. 4: einen Vertikalschnitt durch ein nach dem erfindungsgemäßen Arbeitsverfahren hergestelltes Gar- und Kochgerät im Bereich der Kapselabdeckung, ausschnittsweise
- Fig. 5: den vergrößerten Ausschnitt B aus dem Gegenstand nach Fig. 4 und
- Fig. 6: einen Schnitt C-C durch den Gegenstand der Fig. 4.

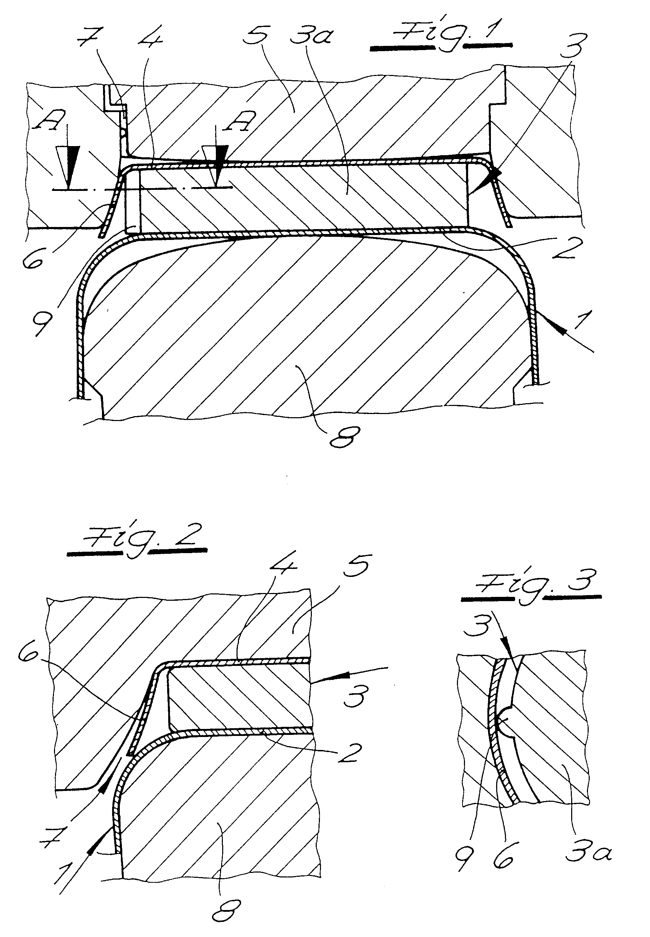

In den Figuren erkennt man zunächst ausschnittsweise Bestandteile eines Gar- oder Kochgerätes mit Aufnahmebehälter 1, Aufnahmebehälterboden 2, Platine 3 aus einem gut gleitenden Werkstoff und Kapselabdeckung 4 der Platine 3. In den Fig. 1 bis 4 weist das Gar- oder Kochgerät mit dem Aufnahmebehälterboden 2 und mit der Kapselabdeckung 4 nach oben. Der Aufnahmebehälter 1 sowie die Kapselabdeckung 4 bestehen aus einem nichtrostenden Stahl. Die Platine 3 mag aus einer Aluminiumlegierung bestehen. Sie wird durch das erfindungsgemäße Verfahren mit dem Aufnahmebehälterboden 2 und der Kapselabdeckung 4 intermetallisch verbunden. Wie dazu im einzelnen verfahren wird, wurde weiter oben bereits beschrieben. Man erkennt in den Fig. 1 und 2, daß im Ausführungsbeispiel mit einer Matrize 5 gearbeitet wird, die im Bereich des Kapselabdeckungskragens 6 eine Entlüftungsausbildung 7 aufweist, über die bei der Impulspressung aus dem Aggregat aus Aufnahmebehälterboden 2, Platine 3 und Kapselabdeckung 4 Luft abführbar ist. Man erkennt in diesen Figuren fernerhin, daß durch die Gestaltung von Matrize 5 und/oder Stempel 8 und/oder Kapselabdeckung 4 im Bereich des Kapselabdeckungskragens 6 bei der Impulspressung erst die Luft ausgedrückt und danach der Kapselabdeckungskragen 6 an den Aufnahmebehälter 1 bzw. an den Übergangsbereich zwischen Aufnahmebehälter 1 und Aufnahmebehälterboden 2 angelegt wird. In der Ausführungsform nach Fig. 1 wird mit einer wird mit einer Matrize gearbeitet deren Entlüftungsausbildungen 7 als Bohrungen im Übergangsbereich zwischen Kapselabdeckung 4 und Kapselabdeckungskragen 6 angeordnet sind. Demgegenüber wird bei der Ausführungsform nach Fig. 2 mit einer Matrize 5 gearbeitet, die im Bereich zwischen dem unverformten Kapselabdeckungskragen 6 und der Matrizenausformung einen Ringspalt 7 zur Entlüftung freiläßt. Zum Rand des Kapselabdeckungskragens hin erweitert sich dieser Ringspalt 7, im Querschnitt betrachtet, keilförmig. Die Anordnung ist im Ergebnis so getroffen, daß der Kapselabdeckungskragen 6 bei der Impulspressung an den Aufnahmebehältern 1 angedrückt wird und im fertigen Koch- und Gargerät an dem Aufnahmebehälter 1 anliegt.

Aus einer vergleichenden Betrachtung der Fig. 1 und 3 entnimmt man zunächt, daß die Plantine 3 an der Kapselabdeckung 4 durch an die Platine 3 randseitig angeformte Zentriervorsprünge 9 statisch bestimmt und spielfrei zentriert wird. Die Platine 3 ist in der Kapselabdeckung 4 auf diese Weise impulspressungsfest angeordnet. Die Platine 3 besteht insoweit aus einem Platinengrundkörper 3a und den Zentriervorsprüngen.

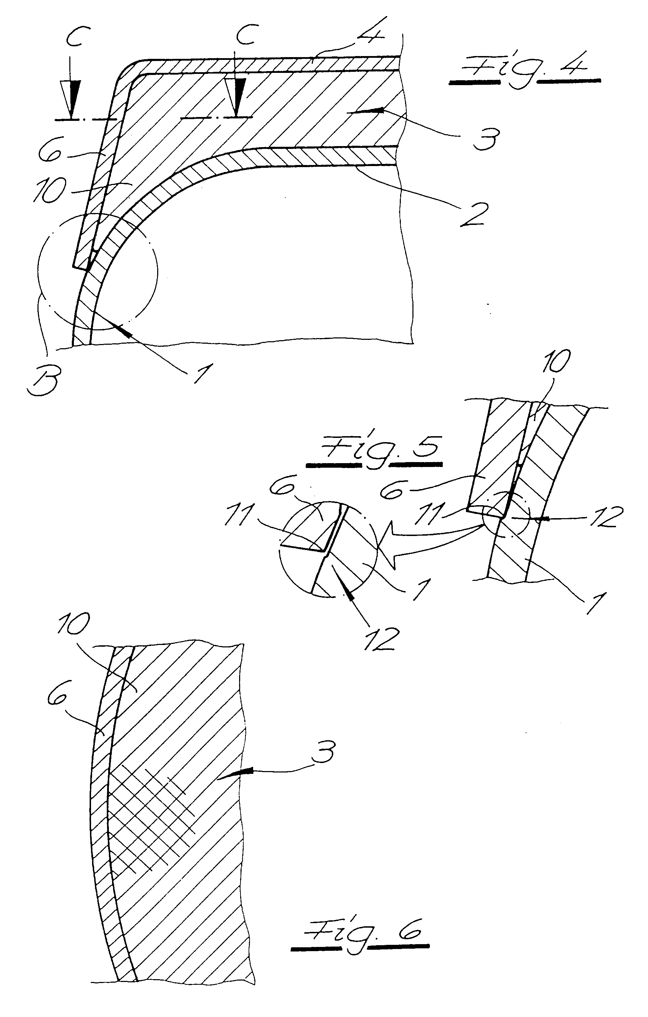

Aus einer vergleichenden Betrachtung der Fig. 4 bis 6 entnimmt man, daß die Impulspressung so geführt wurde, daß bei gleichzeitiger Ausbildung der intermetallischen Verbindung eine stoffschlüssige Fließvereinigung des Platinenwerkstoffes der Platinengrundkörper 3a und der Zentriervorsprünge 9 erreicht wurde und daß fernerhin bei der weiteren Fließverformung der Platinenwerkstoff als einheitlicher Kranz 10, der über den gesamten Umfang einen sehr gleichförmigen Querschnitt aufweist, bis in den Randbereich des Kapselabdeckungskragens 6 gepreßt wurde. Fließvereinigung bedeutet, daß der Platinenwerkstoff keinerlei Trennspalte oder dergleichen mehr aufweist, wenn auch im Bereich eines vorgeformten Zentriervorsprunges 9 im fertigen Gar- oder Kochgerät, stellt man ein Schliffbild her, noch eine gewisse Textur erkennbar ist. Die Impulspressung wurde so geführt, daß eine Kante 11 am Rand des Kapselabdeckungskragens 6 bei der Impulspressung mit der sich ausbildenden Fließverformung dichtend an den Aufnahmebehälter 1 angeformt wurde, wodurch an dem Aufnahmebehälter 1 und an dem Kapselabdeckungskragen 6 sich eine bleibende Verformung 12 ausgebildet hat, wozu auf die Fig. 5 und den lupenartigen Ausschnitt zur Fig. 5 verwiesen wird. Dichtend angepreßt meint dicht in bezug auf den fließverformend "fließenden" Platinenwerkstoff, jedoch so, daß, wie vorstehend beschrieben die Luft ausreichend entweichen kann.

## Patentansprüche

1. Arbeitsverfahren zur Herstellung eines Gar- oder Kochgerätes mit rundem Aufnahmebehälter (1) für das Gar- oder Kochgut,
der einen Aufnahmebehälterboden (2), eine Platine (3) aus wärmeleitenden Platinenwerkstoff und eine Kapselabdeckung der Platine aufweist, welche Kapselabdeckung mit ihrem Kapselabdeckungsboden zum Aufnahmebehälter hin mit konvexer Krümmung geformt ist sowie mit einem Kapselabdeckungskragen an dem runden Aufnahmebehälter in einem gekrümmten Übergangsbereich zwischen Aufnahmebehälterboden und Aufnahmebehältermantel anliegt, wobei der Aufnahmebehälter sowie die Kapselabdeckung aus nichtrostendem Stahl bestehen und die Platine mit dem Aufnahmebehälterboden und der Kapselabdeckung intermetallisch verbunden ist,
wobei zum Zwecke der Herstellung der intermetallischen Verbindung in die Kapselabdeckung eine Platine eingeführt wird, die zum vorgeformten Kapselabdeckungskragen (6) hin einen ringförmigen Fließraum freiläßt, und das Aggregat aus Aufnahmebehälterboden, Platine und Kapselabdeckung im zentrierten Zustand zwischen dem Stempel und der Matrize einer Presse durch einfache oder mehrfache Impulspressung unter Ausformung der konvexen Krümmung des Kapselabdeckungsbodens sowie Anformung des Randes des Kapselabdeckungskragens an den Aufnahmebehälter intermetallisch verbunden wird und wobei bei der Impulspressung die Platine durch Fließverformung in den Fließraum hineingedrückt sowie dabei auch in diesem Bereich mit dem Kapselabdeckungsboden, dem Kapselabdeckungskragen sowie dem entsprechenden Bereich des Aufnahmebehälters intermetallisch verbunden wird, **dadurch gekennzeichnet**, daß mit einer Platine mit im Grundriß kreisförmigen Platinengrundkörper gearbeitet wird, der zumindest drei über ihren kreisförmigen Umfang randseitige Zentriervorsprünge (9) aufweist,
daß die Platine in der Kapselabdeckung durch Anlage der Zentriervorsprünge an den Kapselabdeckungskragen und/oder an einen Übergangsbereich zwischen Kapselabdeckungsboden und Kapselabdeckungskragen impulspressungsfest zentriert wird
und daß die Impulspressung so geführt wird, daß bei gleichzeitiger Ausbildung der intermetallischen Verbindung eine stoffschlüssige Fließverbindung des Platinenwerkstoffes des Platinengrundkörper und der Zentriervorsprünge erreicht sowie bei der weiteren Fließverformung der Platinenwerkstoff als einheitlicher Kragen bis in den Randbereich des Kapselabdeckungskragens gepreßt wird.

2. Verfahren nach Anspruch 1, dadurch gekennzeichnet daß mit einer Platine gearbeitet wird, die über ihren Umfang gleichförmig verteilte Zentrierung aufweist.

3. Verfahren nach einem der Ansprüche 1 oder 2, dadurch gekennzeichnet, daß mit einer Platine gearbeitet wird, die Zentriervorsprünge aufweist, die sich in radialer Richtung sowie in Umfangsrichtung über einige Millimeter erstrecken und zum Kapselabdeckungskragen bzw. zum Übergangsbereich zwischen Kapselabdeckungskragen und Kapselabdeckungsboden hin bogenförmig, vorzugsweise kreisbogenförmig, gestaltet sind.

4. Verfahren nach einem der Ansprüche 1 bis 3, dadurch gekennzeichnet, daß mit einer Platine gearbeitet wird, deren Dicke vor der Fließverformung im kalten Zustand um max. 16 % dicker ist als nach der Fließverformung.

5. Verfahren nach einem dar Ansprüche 1 bis 4, dadurch gekennzeichnet, daß der Rand des Kapselabdeckungskragens oder eine Kante am Rand des Kapselabdeckungskragens bei der Impulspressung mit der sich ausbildenden Fließverformung dichtend an den Aufnahmebehälter angepreßt und dadurch an dem Behälter und/oder an dem Kapselabdeckungskragen eine bleibende Verformung ausgebildet wird.

6. Verfahren nach einem der Ansprüche 1 bis 5, dadurch gekennzeichnet, daß bei der Impulspressung erst die Luft aus dem Bereich zwischen Aufnahmebehälterboden und Kapselabdeckung herausgepreßt und danach der Rand des Kapselabdeckungskragens oder eine Kante am Rand des Kapselabdeckungskragens dichtend an den Aufnahmebehälter angepreßt wird.

7. Verfahren nach einem der Ansprüche 1 bis 6, dadurch gekennzeichnet, daß mit einer Kapselabdeckung gearbeitet wird, deren Blechdicke etwa der Blechdicke des Aufnahmebehälters entspricht.

8. Verfahren nach einem der Ansprüche 1 bis 7, dadurch gekennzeichnet, daß mit einer Kapselabdeckung gearbeitet wird, deren Blechdicke max. 20 % kleiner ist als die Blechdicke des Aufnahmebehälters.

9. Verfahren nach einem der Ansprüche 1 bis 8, dadurch gekennzeichnet, daß mit Platinen aus technisch reinem Aluminium gearbeitet wird.

10. Verfahren nach einem der Ansprüche 1 bis 9, dadurch gekennzeichnet, daß die Impulspressung in bezug auf den Aufnahmebehälter, die Kapselabdeckung und die Platine bei einer Temperatur durchgeführt wird, die im Bereich der Schmelztemperatur der Platine liegt, und daß mit einer Temperatur der Impulspreßwerkzeuge gearbeitet wird, die im Bereich zwischen 100 bis 350° C liegt.

## Claims

1. An operating process for manufacturing a boiling or cooking utensil with a round receiver vessel (1) for the material to be boiled or cooked,
which receiver vessel comprises a receiver vessel base (2), a bottom plate (3) of thermally conducting bottom plate material and an encapsulating cover for the bottom plate, which encapsulating cover is shaped with convex curvature with its encapsulating cover base up to the receiver vessel, and with an encapsulating cover collar on the round receiver vessel in a curved transition region between the receiver vessel base and the receiver vessel sidewall, wherein the receiver vessel and the encapsulating cover consist of stainless steel and the bottom plate is intermetallically bonded to the receiver vessel base and the encapsulating cover,
wherein, for the purpose of producing the intermetallic bond in the encapsulating cover, a bottom plate is introduced which leaves an annular flow space free up to the preformed encapsulating cover collar (6), and the aggregate comprising the receiver vessel base, bottom plate and encapsulating cover is intermetallically bonded in its centred state to the receiver vessel between the punch and the die of a press by single or multiple impulse pressing with the shaping of the convex curvature of the encapsulating cover base and integral formation of the rim of the encapsulating cover collar, and wherein during the impulse pressing the bottom plate is pressed into the flow space by flow deformation and in the course of this procedure is also intermetallically bonded in this region to the encapsulating cover base, to the encapsulating cover collar and to the corresponding region of the receiver vessel, characterised in that a bottom plate with a bottom plate base body which is circular in horizontal projection is employed, which has at least three centring edge projections (9) along its circular periphery,
that the bottom plate is centred in the encapsulating cover so that it remains fixed during impulse pressing by contact of the centring projections with the encapsulating cover collar and/or with a transition region between the encapsulating cover base and the encapsulating cover collar,
and that the impulse pressing is conducted so that simultaneously with the formation of the intermetallic bond a flow bond is achieved with material interlocking of the bottom plate material of the bottom plate base body and of the centring projections, and during further flow deformation the bottom plate material is pressed as a homogeneous ring into the rim region of the encapsulating cover collar.

2. A process according to claim 1, characterised in that a bottom plate is employed which has uniformly distributed centring around its periphery.

3. A process according to either one of claims 1 or 2, characterised in that a bottom plate is employed which has centring projections which extend for a few millimetres in the radial direction and also in the peripheral direction and which are formed in the shape of arcs, preferably circular arcs, facing the encapsulating cover collar or facing the transition region between the encapsulating cover collar and the encapsulating cover base.

4. A process according to any one of claims 1 to 3, characterised in that a bottom plate is employed, the thickness of which before flow deformation in the cold state is greater by a maximum of 16 % than that after flow deformation.

5. A process according to any one of claims 1 to 4, characterised in that the rim of the encapsulating cover collar or an edge at the rim of the encapsulating cover collar is pressed against the receiver vessel with the formation of a seal during impulse pressing with the ensuing flow deformation and by this means a permanent deformation is produced at the vessel and/or at the encapsulating cover collar.

6. A process according to any one of claims 1 to 5, characterised in that during impulse pressing the air is first pressed out of the region between the receiver vessel base and the encapsulating cover and thereafter the rim of the encapsulating cover collar or an edge at the rim of the encapsulating cover collar is pressed against the receiver vessel with the formation of a seal.

7. A process according to any one of claims 1 to 6, characterised in that an encapsulating cover is employed, the sheet metal thickness of which approximately corresponds to the sheet metal thickness of the receiver vessel.

8. A process according to any one of claims 1 to 7, characterised in that an encapsulating cover is employed, the sheet metal thickness of which is a maximum of 20 % less than the sheet metal thickness of the receiver vessel.

9. A process according to any one of claims 1 to 8, characterised in that bottom plates of commercially pure aluminium are employed.

10. A process according to any one of claims 1 to 9, characterised in that the impulse pressing with respect to the receiver vessel, the encapsulating cover and the bottom plate is effected at a temperature which is in the region of the melting point of the bottom plate, and that a temperature of the impulse pressing tools is employed which is in the range between 100 and 350°C.

## Revendications

1. Procédé de fabrication d'un récipient de cuisson, comprenant un récipient rond (1) destiné à recevoir les produits à cuire, un fond (2) de récipient, une platine (3) constituée d'un matériau conducteur de chaleur pour platines et un recouvrement en forme de capsule de la platine, ladite capsule de recouvrement dont le fond est dirigé vers le récipient, présentant une courbure convexe et s'appliquant, dans une zone de transition courbe entre le fond du récipient et l'enveloppe du récipient, avec un collet contre le récipient rond, ledit récipient ainsi que la capsule de recouvrement étant réalisés en acier inoxydable, et la platine étant solidarisée de manière intermétallique avec le fond du récipient et la capsule de recouvrement, dans ladite capsule de recouvrement étant introduite pour la réalisation de la liaison intermétallique, une platine qui laisse subsister, en direction du collet (6) préformé de la capsule de recouvrement, un espace d'écoulement annulaire, et l'unité constituée par le fond du récipient, la platine et la capsule de recouvrement étant solidarisée de manière intermétallique, à l'état centré entre l'estampe et la matrice d'une presse, par compression simple ou multiple par impulsions, avec façonnage de la courbure convexe du fond de la capsule de recouvrement et conformation du rebord du collet de la capsule de recouvrement sur le récipient, et lors de la compression par impulsions, la platine étant enfoncée par fluage dans l'espace d'écoulement, avec liaison intermétallique, dans cette région, avec le fond de la capsule de recouvrement, le collet de la capsule de recouvrement ainsi que la partie correspondante du récipient, **caractérisé en ce** qu'il utilise une platine avec un corps de base circulaire en projection horizontale,qui présente au moins trois saillies de centrage (9) latérales réparties sur sa périphérie circulaire, que dans la capsule de recouvrement, la platine est centrée par application des saillies de centrage contre le collet de la capsule de recouvrement et/ou une zone de transition entre le fond et le collet de la capsule de recouvrement, de manière à résister à la compression par impulsions, et que la compression par impulsions est conduite de façon à obtenir, simultanément avec la réalisation de la liaison intermétallique, une liaison par interpénétration des matériaux du corps de base de la platine et des saillies de centrage, ainsi que, au cours de la déformation par fluage ultérieure, une compression du matériau de la platine sous la forme d'un collet uniforme jusque dans le bord périphérique du collet de la capsule de recouvrement.

2. Procédé selon la revendication 1, caractérisé en ce qu'on travaille avec une platine qui présente un centrage uniforme sur toute sa périphérie.

3. Procédé selon l'une des revendications 1 ou 2, caractérisé en ce qu'on travaille avec une platine munie de saillies de centrage qui s'étendent sur quelques millimètres dans le sens radial ainsi que dans le sens circonférentiel et qui présentent, en direction du collet de la capsule de recouvrement et respectivement de la zone de transition entre le collet et le fond de ladite capsule de recouvrement, une forme en arc, de préférence en arc de cercle.

4. Procédé selon l'une des revendications 1 à 3, caractérisé en ce qu'on travaille avec une platine dont l'épaisseur avant la déformation par fluage à l'état froid est supérieure d'au maximum 16% à celle après la déformation par fluage.

5. Procédé selon l'une des revendications 1 à 4, caractérisé en ce que, lors de la compression par impulsions, le rebord du collet de la capsule de recouvrement ou une arête sur le rebord du collet de la capsule de recouvrement est appliqué de manière étanche, à la suite de la déformation par fluage, contre le récipient, et qu'il en résulte une déformation permanente sur le récipient et/ou sur le collet de la capsule de recouvrement.

6. Procédé selon l'une des revendications 1 à 5, caractérisé en ce que la compression par impulsions provoque tout d'abord l'expulsion de l'air de la région comprise entre le fond du récipient et la capsule de recouvrement, puis l'application étanche du rebord du collet de la capsule de recouvrement ou d'une arête sur le rebord de la capsule de recouvrement contre le récipient.

7. Procédé selon l'une des revendications 1 à 6, caractérisé en ce qu'on travaille avec une capsule de recouvrement dont l'épaisseur de tôle correspond sensiblement à l'épaisseur de tôle du récipient.

8. Procédé selon l'une des revendications 1 à 7, caractérisé en ce qu'on travaille avec une capsule de recouvrement dont l'épaisseur de tôle est inférieure d'au maximum 20 % à celle du récipient.

9. Procédé selon l'une des revendications 1 à 8, caractérisé en ce qu'on travaille avec des platines constituées d'aluminium techniquement pur.

10. Procédé selon l'une des revendications 1 à 9, caractérisé en ce que, en ce qui concerne le récipient, la capsule de recouvrement et la platine, la compression par impulsions est effectuée à une température qui se situe dans la plage de température de fusion de la platine, et qu'on travaille avec une température des outils de compression par impulsion qui est comprise entre 100 et 350°C.
